# EUROPEAN PATENT APPLICATION

(11) **EP 4 782 242 A1**
(43) Date of publication of application: **29.07.2026**
(21) Application number: 24866792.5
(22) Date of filing: 18.03.2024
(51) Int. Cl.: B60K 11/04

(54) **VEHICLE HEAT DISSIPATION SYSTEM AND CONTROL METHOD THEREFOR, AND VEHICLE**

(30) Priority: 22.09.2023 CN 202311228186
(71) Applicant: BYD Company Limited, Shenzhen, Guangdong 518118 (CN)
(72) Inventor: QIU, Jijie, Shenzhen, Guangdong 518118 (CN); WU, Shengchao, Shenzhen, Guangdong 518118 (CN); WANG, Linan, Shenzhen, Guangdong 518118 (CN); XIANG, Fuhua, Shenzhen, Guangdong 518118 (CN); GU, Jiang, Shenzhen, Guangdong 518118 (CN)
(74) Representative: Mathys & Squire
(86) International application number: PCT/CN2024/082109
(87) International publication number: WO 2025/060365

(57) **Abstract**

A vehicle heat dissipation system and a control method therefor, and a vehicle. The vehicle heat dissipation system comprises a first fan, a second fan, and a heat dissipation assembly, the first fan and the second fan are spaced apart from each other, and the heat dissipation assembly is disposed between the first fan and the second fan.

## Description

### CROSS-REFERENCE TO RELATED APPLICATIONS

The present disclosure claims priority to Chinese Patent Application No. 202311228186.1 filed on September 22, 2023, entitled "VEHICLE HEAT DISSIPATION SYSTEM AND CONTROL METHOD THEREFOR, AND VEHICLE", which is incorporated herein by reference in its entirety.

### FIELD

The present disclosure relates to the technical field of new energy vehicles, and in particular, to a vehicle heat dissipation system, a control method therefor, and a vehicle.

### BACKGROUND

Compared to traditional fuel vehicles and electric vehicles, hybrid electric vehicles have more diverse usage scenarios, thus putting forward higher requirements for the internal heat dissipation system of the vehicle. Most of the existing internal heat dissipation systems of vehicles dissipate heat and exchange heat for the heat dissipation assembly and condensers through fans. However, the layout among the fan, the heat dissipation assembly and the condenser is complex, and the control logic for the start-stop and rotational speed of the fan is poor, resulting in low heat dissipation efficiency and poor heat dissipation reliability of the heat dissipation system. This further leads to problems such as overheating or overcooling of the vehicle engine and excessive fan noise during driving.

### SUMMARY

An object of the present disclosure is to provide a vehicle heat dissipation system, a control method therefor, and a vehicle, so as to solve the problems of low heat dissipation efficiency and poor heat dissipation reliability.

To achieve the object of the present disclosure, the present disclosure provides the following technical solutions:
In a first aspect, the present disclosure provides a vehicle heat dissipation system, which includes a first fan, a second fan, and a heat dissipation assembly. The first fan and the second fan are spaced apart from each other, and the heat dissipation assembly is arranged between the first fan and the second fan.

In one embodiment, the vehicle heat dissipation system further includes an engine, and the first fan includes a fan body and a clutch. The clutch connects the engine and the fan body.

In one embodiment, the vehicle heat dissipation system further includes a crankshaft pulley, and the crankshaft pulley is connected to the engine.

In one embodiment, the clutch includes a driving plate and a driven plate. The driving plate is connected to the crankshaft pulley, and the driven plate is connected to the fan body. The driving plate clutches the driven plate such that the fan body is rotatable.

In one embodiment, the clutch controls the rotational speed of the fan body by adjusting the degree of clutch engagement with the fan body.

In one embodiment, the vehicle heat dissipation system further includes a wind deflector and a wind deflector window. The wind deflector is arranged between the first fan and the heat dissipation assembly, and the wind deflector window is mounted on the wind deflector.

In one embodiment, the wind deflector has a preset flow guiding structure, and the flow guiding structure is configured to guide the air flow passing through the first fan to form a regular flow direction.

In one embodiment, the vehicle heat dissipation system further includes a first wind shroud and a second wind shroud. Both the first wind shroud and the second wind shroud are detachably connected to the wind deflector.

In one embodiment, the vehicle heat dissipation system further includes a sealing member. The sealing member is arranged between the wind deflector and the first fan, and/or between the heat dissipation assembly and the first fan.

In one embodiment, the heat dissipation assembly includes a first radiator, a second radiator, and a third radiator. The first radiator is arranged on one side of the first fan, the second radiator is arranged on a side of the first radiator facing away from the first fan, the third radiator and the condenser are arranged on a side of the second radiator facing away from the first radiator, and the second fan is arranged on a side of the third radiator facing away from the second radiator.

In one embodiment, the condenser includes an inlet end and an outlet end. The inlet end is configured to introduce a coolant into the condenser, and the outlet end is configured to guide the coolant out of the condenser. The third radiator is arranged on one side of the inlet end, and the condenser is arranged opposite to the second fan.

In one embodiment, the vehicle heat dissipation system further includes a controller. The controller is electrically connected to the clutch and further electrically connected to the second fan. The controller is configured to collect the vehicle speed and/or operating condition of the vehicle, and control the clutch engagement with the fan body according to the vehicle speed and/or operating condition, and/or control the start-stop of the second fan according to the vehicle speed and/or operating condition.

In a second aspect, the present disclosure further provides a control method for a vehicle heat dissipation system, which includes: acquiring an air intake speed of the vehicle; and adjusting the rotational speed of the first fan and/or the second fan according to the air intake speed of the vehicle.

In one embodiment, the method further includes: acquiring an operating mode of the vehicle; and adjusting the rotational speed of the first fan and/or the second fan according to the operating mode and the air intake speed of the vehicle.

In one embodiment, the method further includes: acquiring the vehicle speed of the vehicle; and adjusting the rotational speed of the first fan and/or the second fan according to the air intake speed and the vehicle speed of the vehicle.

In one embodiment, the method further includes: acquiring an ambient temperature where the vehicle is located; and adjusting the rotational speed of the first fan and/or the second fan according to the air intake speed of the vehicle and the ambient temperature.

In a third aspect, the present disclosure further provides a vehicle, which includes the vehicle heat dissipation system according to any one of the above embodiments.

The present disclosure arranges the first fan and the second fan in the vehicle heat dissipation system, with the first fan and the second fan spaced apart from each other. Accordingly, the condenser and the heat dissipation assembly are arranged between the first fan and the second fan, thereby enabling effective cooperation between the first fan and the second fan, improving heat dissipation efficiency, and thus meeting the heat dissipation requirements of the vehicle. In addition, the rotational speeds of the first fan and the second fan are controlled by the air intake speed, enabling the vehicle to adaptively adjust the rotational speeds of the first fan and the second fan under different operating conditions and different vehicle speeds. Therefore, the fan rotational speed is accurately controlled according to the vehicle driving conditions, which not only avoids overheating or overcooling of the drive device in the vehicle, but also reduces fan noise. Moreover, the reliability of the heat dissipation system is enhanced, which can improve the power performance and economy of the entire vehicle, and is further conducive to energy conservation and emission reduction.

### BRIEF DESCRIPTION OF THE DRAWINGS

To more clearly illustrate the embodiments of the present disclosure or the technical solutions in the prior art, the following will briefly introduce the drawings required for describing the embodiments or the prior art. Obviously, the drawings in the following description are only some embodiments of the present disclosure. For those of ordinary skill in the art, other drawings can be obtained according to these drawings without creative labor.
FIG. 1 is a schematic structural diagram of a vehicle heat dissipation system in a vehicle according to one embodiment;
FIG. 2 is a schematic side structural diagram of a vehicle heat dissipation system according to one embodiment;
FIG. 3 is a schematic structural diagram of a first fan according to one embodiment;
FIG. 4 is a schematic front structural diagram of a vehicle heat dissipation system according to one embodiment;
FIG. 5 is a schematic back structural diagram of a vehicle heat dissipation system according to one embodiment;
FIG. 6 is a schematic layout diagram of a vehicle heat dissipation system according to one embodiment.

### Description of reference signs:

1 - engine; 2 - crankshaft pulley; 3 - first fan; 31 - clutch; 31A - driving plate; 31B - driven plate; 32 - fan body; 4 - wind deflector; 5 - first radiator; 6 - second radiator; 7 - condenser; 8 - second fan; 9 - third radiator; 10 - sealing member; 11 - wind deflector window; 12 - first wind shroud; 13 - second wind shroud; A - heat dissipation assembly.

### DETAILED DESCRIPTION

The technical solutions in the embodiments of the present disclosure will be clearly and completely described below with reference to the accompanying drawings in the embodiments of the present disclosure. Obviously, the described embodiments are only a part of the embodiments of the present disclosure, rather than all the embodiments. Based on the embodiments in the present disclosure, all other embodiments obtained by those of ordinary skill in the art without making creative labor shall fall within the protection scope of the present disclosure.

It will be noted that when a component is referred to as being "fixed to" another component, it may be directly on the other component or there may be an intermediate component. When a component is considered to be "connected" to another component, it may be directly connected to the other component or there may be an intermediate component at the same time.

Unless otherwise defined, all technical and scientific terms used in the present disclosure have the same meanings as commonly understood by those skilled in the technical field to which the present disclosure belongs. The terms used in the specification of the present disclosure are only for the purpose of describing specific embodiments, and are not intended to limit the present disclosure. The term "and/or" used in the present disclosure includes any and all combinations of one or more related listed items.

Some embodiments of the present disclosure will be described in detail below with reference to the accompanying drawings. In the case of no conflict, the following embodiments and features in the embodiments can be combined with each other.

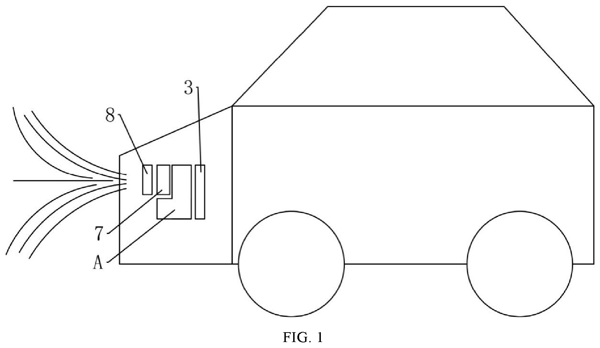

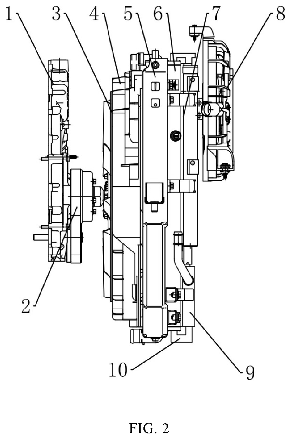

The present disclosure provides a vehicle heat dissipation system. Referring to FIG. 1 and FIG. 2, it includes a first fan 3, a second fan 8, a condenser 7, and a heat dissipation assembly A. The first fan 3 and the second fan 8 are spaced apart from each other, the condenser 7 and the heat dissipation assembly A are arranged between the first fan 3 and the second fan 8, and the first fan 3 and/or the second fan 8 are configured to control the rotational speed according to the air intake speed.

Specifically, the vehicle heat dissipation system can be applied to a hybrid electric vehicle (hereinafter referred to as the vehicle), and the hybrid electric vehicle may include an engine direct drive mode, a hybrid electric vehicle (HEV) mode, and an electric vehicle (EV) mode.

In an embodiment, a cooling liquid may be used as a medium for circulating cooling or heating in the vehicle heat dissipation system. The cooling liquid may include water cooling and oil cooling. Compared with air cooling, the liquid cooling method can achieve higher cooling efficiency; in an embodiment, the cooling liquid may be cooling water, because the use of cooling water has lower cost than oil-based cooling liquid, which is conducive to reducing the cost of the thermal management system.

Further, the types of the first fan 3 and the second fan 8 may be different. In an embodiment, the first fan 3 may be a mechanical fan, and the second fan 8 may be an electric fan.

In an embodiment, the sizes of the first fan 3 and the second fan 8 may be different. It will be understood that the first fan 3 includes a first air intake surface, and the second fan 8 includes a second air intake surface, and the sizes of the first air intake surface and the second air intake surface may be different.

In an embodiment, the first fan 3 and the second fan 8 are spaced apart from each other, and the condenser 7 and the heat dissipation assembly A may be located between the first air intake surface and the second air intake surface. The first fan 3 and the second fan 8 jointly dissipate heat and cool the condenser 7 and the heat dissipation assembly A.

In an embodiment, the heat dissipation assembly A may include a plurality of radiators, which are respectively used for dissipating heat of the engine and the motor. A phase change material may be introduced into the condenser 7 for use in an air conditioning system, so as to exchange heat in the vehicle.

In an embodiment, the first fan 3 and the second fan 8 are sequentially spaced apart from the front of the vehicle to the rear of the vehicle, and the orientations of the first air intake surface and the second air intake surface may be the same. For example, as shown in FIG. 1, the second fan 8 may be arranged at a position close to the front of the vehicle, followed by the condenser 7, the heat dissipation assembly A, and the second fan 8 in sequence. Both the second air intake surface and the first air intake surface may face away from the rear of the vehicle, so the second fan 8 may be configured to guide air to enter the condenser 7 and the heat dissipation assembly A, and the first fan 3 may guide the air at the condenser 7 and the heat dissipation assembly A to be discharged, thereby forming an air circulation. Of course, in other embodiments, the first fan 3 may further be configured to guide air into the condenser 7 and the heat dissipation assembly A.

In an embodiment, the first fan 3 and the second fan 8 are sequentially spaced apart from the front of the vehicle to the rear of the vehicle, and the orientations of the first air intake surface and the second air intake surface may be opposite. For example, the second fan 8 may be arranged at a position close to the front of the vehicle, followed by the condenser 7, the heat dissipation assembly A, and the second fan 8 in sequence. The second air intake surface may face away from the rear of the vehicle, and the first air intake surface may face the rear of the vehicle, so the second fan 8 and the first fan 3 may jointly guide air to enter the condenser 7 and the heat dissipation assembly A.

In an embodiment, a spacing distance is provided between each of the first fan 3 and the second fan 8, and the condenser 7 as well as the heat dissipation assembly A.

In an embodiment, the first fan 3 and/or the second fan 8 are configured to control the rotational speed according to the air intake speed. It will be understood that the air intake speed may be the wind speed after the relative movement between the vehicle and the air when the vehicle is running. Therefore, it will be understood that the higher the vehicle speed, the higher the corresponding air intake speed, and the lower the vehicle speed, the lower the corresponding air intake speed.

In an embodiment, when the vehicle is running, the heat generated by the engine and the motor is relatively high, so when the outlet air temperature of the heat dissipation assembly A is correspondingly high, it is necessary to start the first fan 3 and/or the second fan 8. The first fan 3 may be a main heat dissipation fan, and the second fan 8 may be an auxiliary heat dissipation fan.

When the vehicle speed is relatively high, the power output of the vehicle is small, and due to the high air intake speed, the outlet air temperature of the heat dissipation assembly A is low. At this time, the second fan 8 may stop running, and the second fan 8 may correspondingly reduce the rotational speed or even stop running. When the vehicle is at a torque point, the vehicle speed is low, the power output is large, and due to the low air intake speed, the outlet air temperature of the heat dissipation assembly A is low, the first fan 3 may correspondingly increase the rotational speed or even run at full power, and the second fan 8 may further be started at this time, so as to achieve joint heat dissipation.

The present disclosure arranges the first fan 3 and the second fan 8 in the vehicle heat dissipation system, with the first fan 3 and the second fan 8 spaced apart from each other. Accordingly, the condenser 7 and the heat dissipation assembly A are arranged between the first fan 3 and the second fan 8, thereby enabling effective cooperation between the first fan 3 and the second fan 8, improving heat dissipation efficiency, and thus meeting the heat dissipation requirements of the vehicle. In addition, the rotational speeds of the first fan 3 and the second fan 8 are controlled by the air intake speed, enabling the vehicle to adaptively adjust the rotational speeds of the first fan 3 and the second fan 8 under different operating conditions and different vehicle speeds. Therefore, the fan rotational speed is accurately controlled according to the vehicle driving conditions, which not only avoids overheating or overcooling of the drive device in the vehicle, but also reduces fan noise. Moreover, the reliability of the heat dissipation system is enhanced, which can improve the power performance and economy of the entire vehicle, and is further conducive to energy conservation and emission reduction.

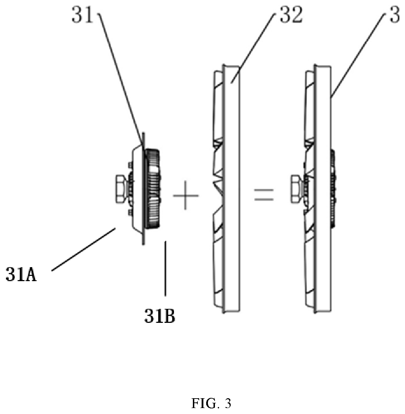

In one embodiment, referring to FIG. 2 and FIG. 3, the vehicle heat dissipation system further includes an engine 1, the first fan 3 includes a fan body 32 and a clutch 31, the engine 1 is drivingly connected to the clutch 31, and the clutch 31 connects the engine 1 and the fan body 32.

Specifically, the vehicle heat dissipation system further includes a crankshaft pulley 2, and the crankshaft pulley 2 is connected to the engine. The clutch 31 is connected to the crankshaft pulley 2. Thus, the engine 1 can drive the clutch 31 to rotate together through the crankshaft pulley 2, and the clutch 31 can be clutch-connected to the fan body 32. Therefore, it will be understood that when the clutch 31 is engaged with the fan body 32, the clutch 31 drives the fan body to rotate together; when the clutch 31 is disengaged from the fan body 32, the fan body 32 is not driven by the clutch 31.

In an embodiment, the clutch 31 may be a silicone oil clutch or an ordinary clutch, which is not specifically limited.

In an embodiment, the clutch 31 includes a driving plate and a driven plate. The driving plate is connected to the crankshaft pulley 2, and the driven plate is connected to the fan body 32. The rotation of the fan body 32 is realized through the clutch engagement between the driving plate and the driven plate.

In an embodiment, the clutch 31 can control the rotational speed of the fan body 32 by adjusting the degree of clutch engagement with the fan body 32. For example, the higher the degree of engagement between the clutch 31 and the fan body 32, the faster the rotational speed of the fan body 32; the lower the degree of engagement, the slower the rotational speed of the fan body 32.

Most mechanical fans used in existing heat dissipation systems are fixedly connected to the crankshaft of the engine through standard parts, and when the engine operates, the mechanical fan further operates accordingly. However, the rotational speed of the mechanical fan is difficult to control, and cannot be adjusted according to the vehicle's operating mode or air intake speed. Therefore, the power performance and economy of existing mechanical fans are poor. In addition, in existing heat dissipation systems, due to the high energy consumption, low efficiency, and high noise of mechanical fans, it is impossible to accurately control the engine water temperature, resulting in poor power performance and economy of the entire vehicle.

Compared with ordinary mechanical fans, silicone oil clutch fans have higher control accuracy, achieve high efficiency, energy conservation and emission reduction, and low noise. At the same time, they will not cause overcooling of the engine, which is conducive to improving the power performance and economy of the entire vehicle.

In an embodiment, since the clutch 31 is driven by the engine 1, the activation of the first fan 3 varies according to different vehicle modes in the present disclosure. For example, when the vehicle is in the HEV mode, the engine 1 transmits power to the driving plate of the clutch 31 through the crankshaft pulley 2. When the outlet air temperature of the heat dissipation assembly A is high, the clutch 31 engages, and the driving plate of the clutch 31 transmits power to the driven plate, so that the fan body 32 operates at a high speed under the drive of the driven plate.

Furthermore, when the vehicle is in the HEV mode, the first fan 3 operates as the main heat dissipation fan, and the second fan 8 will be dynamically adjusted according to the vehicle's operating conditions. When the vehicle speed is high, due to the precise regulation of the clutch 31, the rotational speed of the first fan 3 can further be correspondingly reduced; even when the clutch 31 is completely disengaged, the first fan 3 stops operating. When the vehicle speed is low, the clutch 31 is fully engaged, and the first fan 3 operates at a high speed. When the first fan 3 cannot meet the heat dissipation demand, the second fan 8 will be started and operate at a high speed.

When the vehicle is in the EV mode, the engine is not started at this time, and the first fan 3 does not rotate. At this time, the second fan 8 serves as the main heat dissipation fan. The VCU (Voltage Control Unit) will adjust the rotational speed of the second fan 8 according to the vehicle's operating conditions and air conditioning operation requirements to meet the cooling demand. When the heat dissipation capacity of the second fan 8 cannot meet the cooling demand, the engine will be started to drive the first fan 3 to operate. At this time, the first fan 3 serves as the main heat dissipation fan and cooperates with the second fan 8 to achieve heat dissipation.

During the operation of the heat dissipation system, the precise control of the clutch 31 ensures heat dissipation, avoiding overcooling and overheating phenomena, greatly improving energy utilization efficiency, reducing noise, and improving the power performance, economy, and NVH performance of the entire vehicle (NVH refers to Noise, Vibration, and Harshness, which is a comprehensive indicator to measure the manufacturing quality of the vehicle and brings subjective and intuitive feelings to vehicle users). Meanwhile, when the vehicle just starts or is running at a high speed, the clutch 31 is in a disengaged state, and the fan body 32 is not driven, thereby avoiding engine overcooling that affects the power performance and economy of the entire vehicle. The non-operation of the first fan 3 further reduces fuel consumption and noise.

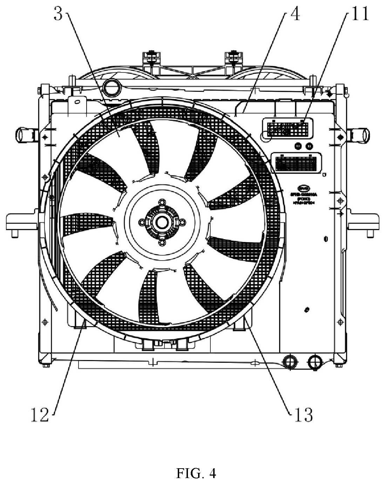

In one embodiment, referring to FIG. 2 and FIG. 4, the vehicle heat dissipation system further includes a wind deflector 4 and a wind deflector window 11. The wind deflector 4 is arranged between the first fan 3 and the heat dissipation assembly A, and the wind deflector window 11 is mounted on the wind deflector 4. Specifically, the wind deflector 4 may be arranged on the side of the first air intake surface of the first fan 3. The wind deflector 4 may be arranged with a mounting position, and the wind deflector window 11 is mounted on the mounting position.

In existing heat dissipation systems, most mechanical fans directly dissipate heat for components, and the air flow direction is uncontrollable, resulting in low air volume utilization rate and serious air flow leakage. Therefore, the present disclosure adds the wind deflector 4 between the first fan 3 and the heat dissipation assembly A, and arranges the wind deflector window 11 on the wind deflector 4. This can effectively guide the flow and improve the air flow sealing effect, avoid air flow leakage and reduce backflow, make the air flow pass through the cooling module more concentratedly, improve the air flow utilization rate, and enhance the heat dissipation capacity.

In an embodiment, the wind deflector 4 has a preset flow guiding structure, which is configured to guide the air flow passing through the first fan 3 to form a regular flow direction, thereby improving the air flow utilization rate.

In an embodiment, the number of wind deflector windows 11 is multiple. Arranging a plurality of wind deflector windows 11 on the wind deflector 4 is conducive to the uniform flow of air through the radiator and improves the heat dissipation performance.

In an embodiment, the plurality of wind deflector windows 11 are arranged in an array. Alternatively, the plurality of wind deflector windows 11 are arranged irregularly.

In an embodiment, the wind deflector 4, the heat dissipation assembly A, the condenser 7, and the second fan 8 are fixedly connected through sheet metal brackets and standard parts, thereby forming a modular structure.

In one embodiment, referring to FIG. 2 and FIG. 4, the vehicle heat dissipation system further includes a first wind shroud 12 and a second wind shroud 13. Both the first wind shroud 12 and the second wind shroud 13 are detachably connected to the wind deflector 4. Specifically, the first wind shroud 12 and the second wind shroud 13 are mounted at the edge of the air passage matched with the fan body 32. The first wind shroud 12 and the second wind shroud 13 are of a split structure and are detachably connected to the wind deflector 4.

In an embodiment, after the heat dissipation assembly A and the condenser 7 are assembled, the first wind shroud 12 and the second wind shroud 13 are assembled, so as to avoid interference and collision between the first wind shroud 12, the second wind shroud 13 and the fan blades, which may damage the blades.

It will be noted that in the prior art, after the condenser 7 and the heat dissipation assembly A are installed, due to the extrusion and interference between parts, the condenser 7 and the heat dissipation assembly A may collide and damage the fan body 32 of the first fan 3. Therefore, the addition of the first wind shroud 12 and the second wind shroud 13 facilitates the assembly of the condenser 7 and the heat dissipation assembly A with the vehicle body, so as to avoid collision and damage to the fan body 32 during the assembly of the condenser 7 and the heat dissipation assembly A.

In one embodiment, referring to FIG. 2, the vehicle heat dissipation system further includes a sealing member 10. The sealing member 10 is arranged between the wind deflector 4 and the first fan 3, and/or between the heat dissipation assembly A and the first fan 3. Specifically, the sealing member 10 may be a sealing cotton strip. Of course, in other embodiments, it may be a sealing silicone strip.

In an embodiment, the sealing member 10 is arranged between the wind deflector 4, the condenser 7, and the heat dissipation assembly A, as well as on their peripheries. In an embodiment, the sealing member 10 may further be arranged at the connection between the wind deflector 4 and the wind deflector window 11, and at the connection between the first wind shroud 12 and the second wind shroud 13.

In the prior art, the heat dissipation system has serious air flow leakage, which affects the heat dissipation performance and the NVH performance of the entire vehicle. It may even generate a large amount of backflow that flows reversely through the heat dissipation assembly A and collides with the air flow flowing forward, further reducing the effectively utilized air flow. The chaotic collision of air flow will further generate a lot of noise, affecting the NVH performance of the entire vehicle.

Therefore, the advantages of arranging the sealing member 10 are: on the one hand, it can improve the air flow sealing effect, avoid air flow leakage and reduce backflow, make the air flow pass through the cooling module more concentratedly, improve the air flow utilization rate, and enhance the heat dissipation capacity; on the other hand, it can further improve the NVH performance of the vehicle, preventing the noise generated during the operation of the heat dissipation system from being transmitted into the passenger compartment.

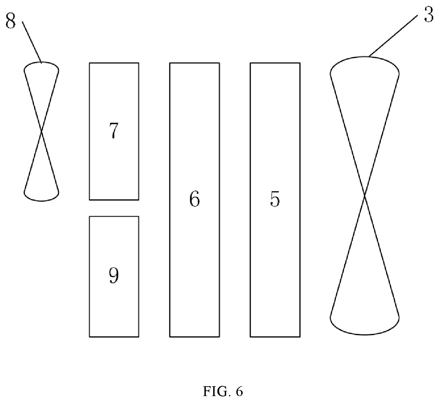

In one embodiment, referring to FIG. 2 and FIG. 6, the heat dissipation assembly A includes a first radiator 5, a second radiator 6, and a third radiator 9. The first radiator 5 is arranged on one side of the first fan 3, the second radiator 6 is arranged on the side of the first radiator 5 facing away from the first fan 3, the third radiator 9 and the condenser 7 are arranged on the side of the second radiator 6 facing away from the first radiator 5, and the second fan 8 is arranged on the side of the third radiator 9 facing away from the second radiator 6.

Specifically, the first radiator 5 may be a high-temperature radiator for dissipating heat of the engine, the second radiator 6 may be a low-temperature radiator for dissipating heat of the generator, and the third radiator 9 is an auxiliary radiator (further called an intercooler) which may be used for dissipating heat of other heating components.

In an embodiment, there is a spacing distance between the first radiator 5 and the second radiator 6, and a spacing distance between the second radiator 6 and the third radiator 9 as well as the condenser 7.

In the prior art, except for the condenser 7, the radiators are highly integrated, resulting in ineffective cooling of the intake air temperature of the engine and the motor, which affects the power performance and economy of the engine and the motor. In addition, the layout of the radiators and the condenser 7 lacks compactness, occupying a large layout space, and the air flow cannot pass uniformly. The radiators are shielded by the condenser 7, leading to a decrease in air flow velocity, thus resulting in uneven heat dissipation of the radiators and affecting the heat dissipation performance.

Therefore, the present disclosure separates the third radiator 9 from the highly integrated single radiator and arranges it together with the condenser 7 on one side of the second radiator 6 and close to the second fan 8. This separates the third radiator 9 from the first radiator 5, enabling better control of the engine intake air temperature and improving the power performance and economy of the engine. The side-by-side arrangement further makes the entire heat dissipation assembly A more compact and efficient.

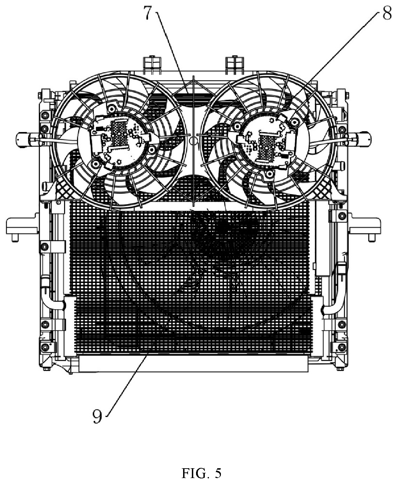

In one embodiment, referring to FIG. 5 and FIG. 6, the condenser 7 includes an inlet end and an outlet end. The inlet end is configured to introduce a coolant into the condenser 7, and the outlet end is configured to guide the coolant out of the condenser 7. The third radiator 9 is arranged on one side of the inlet end, and the condenser 7 is arranged opposite to the second fan 8.

Specifically, as shown in the figures, the third radiator 9 may be located below the condenser 7. In the figures, the coolant in the condenser 7 flows from bottom to top. The condenser 7 is arranged directly opposite to the second fan 8.

By designing the flow path of the coolant in the condenser 7 from bottom to top, the subcooling zone can be kept away from the third radiator 9, avoiding the subcooling zone being disturbed by the heat of the third radiator 9. In addition, the second fan 8 is attached to one side above the condenser 7 and opposite to the subcooling zone of the condenser 7, which not only ensures the heat dissipation of the condenser 7 in the EV mode (when the engine is not running and the first fan 3 does not rotate), but also helps to improve the subcooling degree of the condenser 7, greatly enhancing the air conditioning performance.

In one embodiment, the vehicle heat dissipation system further includes a controller. The controller is electrically connected to the clutch 31 and further electrically connected to the second fan 8. The controller is configured to collect the vehicle speed and/or operating condition of the vehicle, and control the clutch engagement between the clutch 31 and the fan body 32 according to the vehicle speed and/or operating condition, and/or control the start-stop of the second fan 8 according to the vehicle speed and/or operating condition.

Specifically, the vehicle heat dissipation system further includes a controller, which can collect parameters such as the operating condition, vehicle speed, and external environment of the existing vehicle, and control the operation of the first fan 3 and the second fan 8 according to the above parameters.

In an embodiment, the controller can collect the operating mode of the vehicle (HEV or EV mode). It will be understood that in different operating modes, the start-stop sequence of the first fan 3 and the second fan 8 may be different; and the rotational speeds of the first fan 3 and the second fan 8 may be different. For specific implementation methods, reference may be made to the above embodiments.

In an embodiment, the controller can collect the driving mode of the vehicle, where the driving modes may include paved road mode, low adhesion mode, snow mode, mud mode, sand mode, mountain/rock mode, etc. It will be understood that in different driving modes, the start-stop sequence of the first fan 3 and the second fan 8 may be different; and the rotational speeds of the first fan 3 and the second fan 8 may be different. For example, in the paved road mode, the vehicle runs stably, and the torque demand on the engine is low. When the vehicle works at a high speed, the heat and air volume of the radiator are balanced, and energy saving can be achieved by reducing the rotational speed of the fans or stopping the fans. Alternatively, in the mountain/rock mode, the vehicle runs on rough terrain, and the torque demand on the engine is high. When the vehicle works at a low speed, the heat and air volume of the radiator are unbalanced, and the heat dissipation can be enhanced by increasing the rotational speed of the fans.

In an embodiment, the controller can collect the ambient temperature and natural wind speed where the vehicle is located. It will be understood that under different ambient temperatures or natural wind speeds, the heat dissipation capacity of the radiator is different, so the first fan 3 and the second fan 8 can be adjusted according to different ambient temperatures or natural wind speeds. For example, when the vehicle is driving in an environment with low temperature or high natural wind speed, the heat dissipation capacity of the radiator to the outside is high, so energy saving can be achieved by reducing the rotational speed of the fans or stopping the fans.

In an embodiment, the controller can collect the vehicle speed of the vehicle. It will be understood that at different vehicle speeds, the air intake speed at the front of the vehicle is different, so the influence of air flow velocity on the heat dissipation of the radiator is different. Therefore, the first fan 3 and the second fan 8 can be adjusted according to the vehicle speed.

In one embodiment, the present disclosure further provides a control method for a vehicle heat dissipation system, including: acquiring an air intake speed of the vehicle; and adjusting the rotational speed of the first fan 3 and/or the second fan 8 according to the air intake speed.

Specifically, the vehicle is the vehicle in the above embodiment. The air intake speed may be the wind speed after the relative movement between the vehicle and the air when the vehicle is running. Therefore, it will be understood that the higher the vehicle speed, the higher the corresponding air intake speed, and the lower the vehicle speed, the lower the corresponding air intake speed. In an embodiment, the adjustment of the rotational speed of the first fan 3 and/or the second fan 8 may refer to the above embodiments, which will not be repeated here.

In one embodiment, before acquiring the air intake speed of the vehicle, the method further includes: acquiring the operating mode of the vehicle; and acquiring the air intake speed of the vehicle under the operating mode.

Specifically, before acquiring the air intake speed of the vehicle, the operating mode of the vehicle may be judged first to distinguish whether the vehicle is in any one of the engine direct drive mode, HEV mode, or EV mode.

Furthermore, according to different operating modes and vehicle speeds, the working modes of the first fan 3 and the second fan 8 are as follows:
(1) When the vehicle is in the engine direct drive mode or HEV mode, the first fan 3 operates as the main heat dissipation fan. At a high vehicle speed, the rotational speed of the first fan 3 decreases as the vehicle speed increases; the rotational speed of the second fan 8 decreases as the vehicle speed increases, or the second fan 8 stops.
(2) When the vehicle is in the engine direct drive mode or HEV mode, the first fan 3 operates as the main heat dissipation fan. At a low vehicle speed, the rotational speed of the first fan 3 increases as the vehicle speed decreases; the rotational speed of the second fan 8 increases as the vehicle speed decreases.
(3) When the vehicle is in the EV mode, the second fan 8 operates as the main heat dissipation fan. At a high vehicle speed, the rotational speed of the second fan 8 decreases as the vehicle speed increases; the rotational speed of the first fan 3 decreases as the vehicle speed increases, or the first fan 3 stops.
(4) When the vehicle is in the EV mode, the second fan 8 operates as the main heat dissipation fan. At a low vehicle speed, the rotational speed of the second fan 8 increases as the vehicle speed decreases; the rotational speed of the first fan 3 increases as the vehicle speed decreases.

In one embodiment, after acquiring the air intake speed of the vehicle, the method further includes: acquiring the operating mode of the vehicle; acquiring the air intake speed of the vehicle under the operating mode; and acquiring the ambient temperature where the vehicle is located.

Specifically, after acquiring the air intake speed of the vehicle, the ambient temperature where the vehicle is located may be detected, and the rotational speed of the first fan 3 and/or the second fan 8 may be further adjusted according to the ambient temperature.

In one embodiment, the present disclosure further provides a vehicle, including the vehicle heat dissipation system according to any one of the above embodiments.

In the description of the embodiments of the present disclosure, it will be noted that the orientations or positional relationships indicated by the terms "center", "upper", "lower", "left", "right", "vertical", "horizontal", "inner", "outer", etc. are based on the orientations or positional relationships shown in the accompanying drawings, and are only for the convenience of describing the present disclosure and simplifying the description, rather than indicating or implying that the referred device or element must have a specific orientation, be constructed and operated in a specific orientation, and thus will not be understood as a limitation on the present disclosure.

The above-disclosed is only a preferred embodiment of the present disclosure, and of course, it cannot be used to limit the scope of rights of the present disclosure. Those of ordinary skill in the art will understand all or part of the process of implementing the above embodiment, and equivalent changes made according to the claims of the present disclosure still fall within the scope covered by the present disclosure.

## Claims

1. A vehicle heat dissipation system, comprising a first fan (3), a second fan (8), and a heat dissipation assembly (A), the first fan (3) and the second fan (8) being spaced apart from each other, and the heat dissipation assembly (A) being arranged between the first fan (3) and the second fan (8).

2. The vehicle heat dissipation system according to claim 1, wherein the vehicle heat dissipation system further comprises an engine (1), the first fan (3) comprises a fan body (32) and a clutch (31), and the clutch (31) connects the engine (1) and the fan body (32).

3. The vehicle heat dissipation system according to claim 2, wherein the vehicle heat dissipation system further comprises a crankshaft pulley (2), and the crankshaft pulley (2) is connected to the engine (1).

4. The vehicle heat dissipation system according to claim 3, wherein the clutch (31) comprises a driving plate (31A) and a driven plate (31B), the driving plate (31A) is connected to the crankshaft pulley (2), the driven plate (31B) is connected to the fan body (32), and the driving plate (31A) clutches the driven plate (31B) such that the fan body (32) is rotatable.

5. The vehicle heat dissipation system according to any one of claims 2 to 4, wherein the clutch (31) controls the rotational speed of the fan body (32) by adjusting the degree of clutch engagement with the fan body (32).

6. The vehicle heat dissipation system according to any one of claims 1 to 5, wherein the vehicle heat dissipation system further comprises a wind deflector (4) and a wind deflector window (11), the wind deflector (4) is arranged between the first fan (3) and the heat dissipation assembly (A), and the wind deflector window (11) is mounted on the wind deflector (4).

7. The vehicle heat dissipation system according to claim 6, wherein the wind deflector (4) has a preset flow guiding structure, and the flow guiding structure is configured to guide the air flow passing through the first fan (3) to form a regular flow direction.

8. The vehicle heat dissipation system according to claim 6 or 7, wherein the vehicle heat dissipation system further comprises a first wind shroud (12) and a second wind shroud (13), and both the first wind shroud (12) and the second wind shroud (13) are detachably connected to the wind deflector (4).

9. The vehicle heat dissipation system according to any one of claims 6 to 8, wherein the vehicle heat dissipation system further comprises a sealing member (10), the sealing member (10) is arranged between the wind deflector (4) and the first fan (3), and/or between the heat dissipation assembly (A) and the first fan (3).

10. The vehicle heat dissipation system according to any one of claims 1 to 9, wherein the heat dissipation assembly (A) comprises a condenser (7), a first radiator (5), a second radiator (6), and a third radiator (9), the first radiator (5) is arranged on one side of the first fan (3), the second radiator (6) is arranged on a side of the first radiator (5) facing away from the first fan (3), the third radiator (9) and the condenser (7) are arranged on a side of the second radiator (6) facing away from the first radiator (5), and the second fan (8) is arranged on a side of the third radiator (9) facing away from the second radiator (6).

11. The vehicle heat dissipation system according to claim 10, wherein the condenser (7) comprises an inlet end and an outlet end, the inlet end is configured to introduce a coolant into the condenser (7), the outlet end is configured to guide the coolant out of the condenser (7), the third radiator (9) is arranged on one side of the inlet end, and the condenser (7) is arranged opposite to the second fan (8).

12. The vehicle heat dissipation system according to any one of claims 2 to 11, wherein the vehicle heat dissipation system further comprises a controller, the controller is electrically connected to the clutch (31) and further electrically connected to the second fan (8);
the controller is configured to collect the vehicle speed and/or operating condition of the vehicle, and control the clutch engagement between the clutch (31) and the fan body (32) according to the vehicle speed and/or operating condition, and/or control the start-stop of the second fan (8) according to the vehicle speed and/or operating condition.

13. A control method for a vehicle heat dissipation system, comprising:
acquiring an air intake speed of a vehicle;
adjusting the rotational speed of the first fan (3) and/or the second fan (8) according to the air intake speed of the vehicle.

14. The control method for a vehicle heat dissipation system according to claim 13, further comprising:
acquiring an operating mode of the vehicle;
adjusting the rotational speed of the first fan (3) and/or the second fan (8) according to the operating mode and the air intake speed of the vehicle.

15. The control method for a vehicle heat dissipation system according to claim 13, further comprising:
acquiring the vehicle speed of the vehicle;
adjusting the rotational speed of the first fan (3) and/or the second fan (8) according to the air intake speed and the vehicle speed of the vehicle.

16. The control method for a vehicle heat dissipation system according to claim 13, further comprising:
acquiring an ambient temperature where the vehicle is located;
adjusting the rotational speed of the first fan (3) and/or the second fan (8) according to the air intake speed of the vehicle and the ambient temperature.

17. A vehicle, comprising the vehicle heat dissipation system according to any one of claims 1 to 16.
